(19) Europäisches Patentamt

European Patent Office

Office européen des brevets

(11) **EP 0 905 401 A2**

(12) **EUROPEAN PATENT APPLICATION**

(43) Date of publication:
**31.03.1999 Bulletin 1999/13**

(51) Int. Cl.$^6$: **F16D 51/20**

(21) Application number: **98116023.7**

(22) Date of filing: **25.08.1998**

(84) Designated Contracting States:
**AT BE CH CY DE DK ES FI FR GB GR IE IT LI LU
MC NL PT SE**
Designated Extension States:
**AL LT LV MK RO SI**

(30) Priority: **27.08.1997 JP 246129/97**

(71) Applicant:
**Nisshinbo Industries, Inc.
Chuo-ku, Tokyo 103-0013 (JP)**

(72) Inventors:
• **Asai, Seiji
Okazaki-shi, Aichi 444-0856 (JP)**
• **Ikeda, Takashi,
Nisshinbo Industries Inc Nagoya
Nagoya-shi, Aichi 457-0841 (JP)**

(74) Representative:
**Sajda, Wolf E., Dipl.-Phys. et al
MEISSNER, BOLTE & PARTNER
Widenmayerstrasse 48
80538 München (DE)**

(54) **Drum brake device**

(57) A drum brake device is disclosed in which the brake shoes (2, 3) return smoothly when the service brake is operated before a vehicle equipped with the drum brake device starts on a slope. In the drum brake device, a circumferential edge (S) of the respective linings (6) of the brake shoes (2, 3) at the service brake actuator (8) side nearest the first adjacent ends (2a, 3a) of the brake shoes (2, 3) is located on a line of action (B) of the service brake actuator (8) or at a point which is closer to the anchor (9) than that line.

Fig. 1

EP 0 905 401 A2

## Description

The present invention relates to a drum brake device that functions as a leading-trailing type or LT type when the service brake is applied, and as a duo-servo type or DS type when the parking brake is applied. In particular, the invention relates to a drum brake device which enables a smooth return of the respective brake shoe when a vehicle is starting on a slope.

A drum brake device of this type has been disclosed in US-A-5,275,260 and AU-B1-53 491/79.

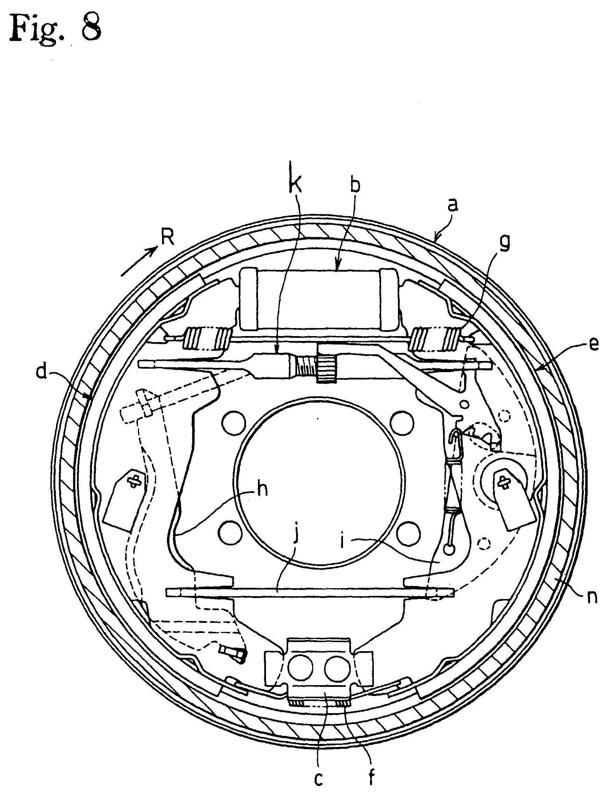

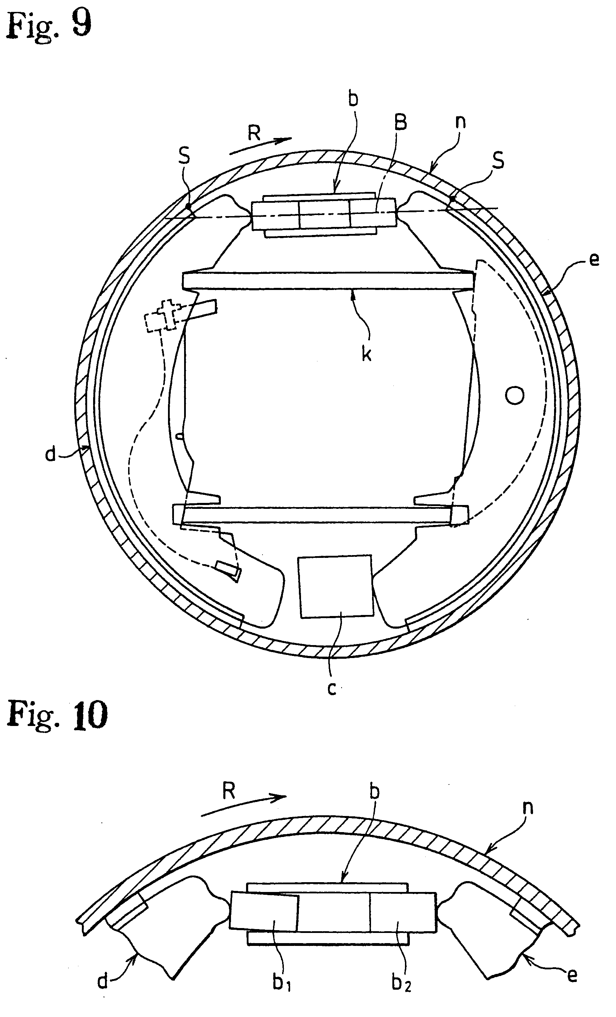

Such a conventional device is is explained below with reference to Figure 8 and Figure 9 of the drawings. A wheel cylinder **b** and an anchor block **c** are provided on upper and lower parts of a back plate **a**. The upper ends and lower ends of a pair of brake shoes **d** and **e** engage the wheel cylinder **b** and the anchor block **c**, respectively.

Shoe return springs **f** and **g** extend between the lower ends of the brake shoes **d** and **e**, and between the upper ends of the brake shoes **d** and **e**, respectively. A parking brake lever **h** is pivotably provided at the lower part of the brake shoe **d** at the left side in the arrangement according to Figure 8. The central region of a pivot lever **i** is pivoted so as to swing on the central region of the brake shoe **e** at the right side in Figure 8. A rod **j** bridges between the brake shoes **d** and **e** adjacent to the anchor block **c**. In Figure 8, the left end of the rod **j** engages with the parking lever **h**, while the right end of the rod **j** engages with the lower end of the pivot lever **i**.

A screw type shoe clearance adjustment device **k** is provided between the brake shoes **d** and **e** adjacent to the wheel cylinder **b**. In Figure 8, the left end of the shoe clearance adjustment device **k** engages with the brake shoe **d**, while the right end of the shoe clearance adjustment device **k** engages with the upper parts of the brake shoe **e** and the pivot lever **i**.

When the wheel cylinder **b** operates to activate the service brake, the drum brake device explained above funtions as an LT type brake where both brake shoes **d** and **e** spread open with the point of abutment with the anchor block **c** as the fulcrum.

When the parking brake is operated, the rotating force of the parking lever **h** is transmitted to the rod **j**, the pivot lever **i**, and the shoe clearance adjustment device **k** in the given order, and the brake shoe **d** at the left side in Figure 8 spreads open with the point of the abutment with the anchor block **c** as the fulcrum and frictionally engages a brake drum **n**.

The pivot lever **i** rotates with the point of abutment with the shoe clearance adjustment device **k** as the fulcrum, and then the brake shoe **e** at the right side in Figure 8 pivotably supporting the pivot lever **i** spreads open to frictionally engage with the brake drum **n**. The reaction force of the parking lever **h** affects the lower end of the brake shoe **d** at the left side in Figure 8.

Furthermore, if a rotational force in the direction of an arrow R is applied to the brake drum **n**, when a vehicle a stopped on a downhill or an uphill slope, the frictional force of the brake shoe **d** at the left side in Figure 8 is transmitted via the shoe clearance adjustment device **k** as the force needed to open the brake shoe **e** at the right side in Figure 8.

In addition, when the rotational force is applied in the direction opposite of the arrow R, the frictional force of the brake shoe **e** at the right side in Figure 8 is transmitted via the shoe clearance adjustment device **k** to the brake shoe **d** at the left side in Figure 8. Accordingly, such a drum brake device functions as a DS type brake when the parking brake is in operation.

Generally, when a vehicle is stopped on a slope, the vehicle is stopped by the service brake first, then the parking brake is operated , while the service brake is in operation, and thereafter the service brake is released so that the vehicle is in its parking condition. When the service brake is released after setting the parking brake, the brake drum **n** slightly rotates with the wheel, for example in the direction of the arrow R due to gravity affecting on the vehicle, which creates the braking force.

When a vehicle is starting from the condition where it is stopped on a slope, in particular for a manual transmission vehicle, the parking brake is released while the service brake is in operation, and then the service brake is immediately released to move the vehicle.

In such a situation, if the vehicle is to start upon releasing the service brake, a circumferential edge of each lining of the respective brake shoe at the wheel cylinder **b** side is located outside a line of action B of the wheel cylinder **b**. Therefore, the portions between the crossing points of the line of action B and the circumference of the linings and the point of the respective circumferential edge S maintains the brake effect, which creates a possibility that one of the brake shoes **d** and **e** may not be able to return to the anchor **c** side smoothly.

That is, when the vehicle is moving to rotate the brake drum **n** in the direction of the arrow R, the portions above the line of action B of one brake shoe is dragged so that the brake shoe **d** is apt to bite between the piston of the wheel cylinder **b** and the brake drum **n**, which prevents returning of the brake shoe **d**.

In particular, when a ledge surface of the back plate **a**, with which the brake shoe **d** is slidably contacting, is rough, the rough surface worsens further the returning of the brake shoe **d**. Accordingly, the dragging effect explained above occurs when the vehicle is starting upon releasing the service brake, which gives an uncomfortable feeling to a driver.

In addition, when the vehicle starts upon releasing the service brake, the durability of the wheel cylinder **b** decreases because of a larged amplified force by leverage on the piston of the wheel cylinder **b**.

Such a situation is explained in the enlarged diagram of Figure 10: when the vehicle is moving to rotate the brake drum **n** in the direction of the arrow R, a large amplified force by leverage affects on the left piston **b**1 of the pistons **b**1 and **b**2 within the wheel cylinder **b**, which causes scratching or wearing between the piston **b**1 and the bore accommodating it.

Also, when the vehicle is moving to rotate the brake drum **n** in the direction opposite to the arrow R, the brake shoe **d** is returned with the brake drum **n** until it abuts against the anchor block **c** and easily returns to its original position without any problem.

Moreover, when the vehicle is moving to rotate the brake drum **n** in the direction opposite to the arrow R in a condition where the brake shoe **d** abuts against the anchor block **c** with the parking brake in operation, the same type of problem described above can be clearly seen with respect to the other brake shoe **e**.

The aim of the present invention is to resolve the problems discussed above, and hence the object underlying the present invention is to provide a drum brake device which is capable of realizing a smooth return of the brake shoe whenever the parking brake is released.

According to the invention, this problem is solved in an advantageous and satisfying manner. According to the invention, a drum brake device is provided comprising: a back plate; two brake shoes set to face each other on top of the back plate; a service brake actuator which is activated by a service brake mounted on top of the back plate between one pair of first adjacent ends of the brake shoes; an anchor mounted on the back plate between the other pair of second adjacent ends of the brake shoes; a shoe clearance adjustment device provided adjacent to the service brake actuator and provided between the brake shoes; a parking brake actuator activated by a parking brake provided adjacent to the anchor; linings provided on the two brake shoes; and a pivot lever pivotably mounted at a pivot point a the central region of one brake shoe, one end of the pivot lever and the other end of the pivot lever respectively being functionally engaged with the shoe clearance adjustment device and the parking brake actuator.

In the drum brake device according to the present invention, a circumferential edge of each lining of the respective brake shoe at the service brake actuator side is loacted on the line of action of the service brake actuator, or at a point closer to the anchor than that line.

According to a further development of the drum brake device of the present invention, a chamfer is formed at the respective end of the lining at the circumferential end on each of the brake shoes.

Further objects, features and advantages of the present invention will become readily apparent from the following description of preferred embodiments when considered in conjunction with the accompanying drawings wherein:

Figure 1    is a plan view of a first embodment of the drum brake device according to the present invention;

Figure 2    is an enlarged plan view of the parts adjacent to a service brake actuator of the drum brake device according to the invention;

Figure 3    is a cross-section view taken along the line III-III in Fig. 2;

Figure 4    is a cross-section view taken along the line IV-IV in Fig. 2;

Figure 5    is a cross-section view taken along the line V-V in Fig. 1;

Figure 6    is an operation model view explaining the operation when releasing the service brake of the drum brake device according to the invention on a slope;

Figure 7    is a plan view of chamfers formed on the ends of the lining of the brake shoes in accordance with a second embodiment of the drum brake according to the invention;

Figure 8    is a plan view of a conventional drum brake device;

Figure 9    is an operation model view explaining the operations of the construction according to Fig. 8 when releasing the parking brake of the drum brake device; and

Figure 10    is a partially enlarged view of Figure 9.

## First Embodiment

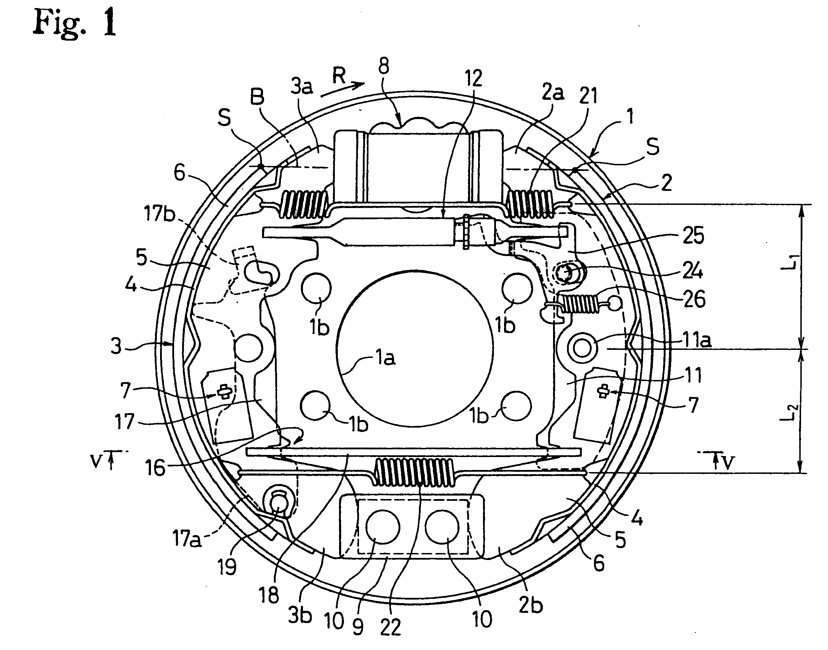

A first embodiment of the invention will now be explained with reference to Figure 1 to Figure 5 of the drawings.

As shown in Figure 1, a center hole 1a of a back plate 1 is to be fitted over a vehicle axle with a gap and is affixed to a stationary part of the vehicle by means of bolts through a plurality of bolt holes 1b.

A pair of brake shoes 2, 3 comprises shoe webs 5 fixed on the inner surface of curved shoe rims 4, so as to form a T-shaped section in cross-section. Linings 6 are fixed on the outer surfaces of the shoe rims 4. The linings 6 frictionally engage with a brake drum, not shown in the drawings, to brake the brake drum.

The brake shoes 2 and 3 are elastically supported on the back plate 1 by conventional shoe hold devices 7 comprising a conventional plate spring and pin arrangement.

The fixing points of the linings 6 of the brake shoes 2 and 3 at the side of a service brake actuator 8, i.e. the points of the circumferential edges S of the linings 6, are located on a line of action B of the service brake actuator 8 or at points which are closer to the anchor 9 than that line of action B. This provides a smooth return of the brake shoes 2 and 3 to prevent any dragging of the brake shoes 2 and 3 and to prevent the brake shoes 2 and 3 being locked when the service brake is operated before the vehicle starts on a slope.

Strictly speaking, the points of the circumferential edges S are to be measured when the parking brake is in operation; the amount of displacement, however, does not need to be considered since it is too small.

The service brake actuator 8 is a fluid pressure type or an air pressure type cylinder of conventional construction, which service brake actuator 8 is activated when the service brake is operated. The service brake actuator 8 is provided between the adjacent upper ends 2a and 3a of the brake shoes 2 and 3, facing each other, and is mounted on the back plate 1 by bolts, etc..

The anchor 9 is fixed on the back plate 1 by means of rivets 10 and supports the other adjacent lower ends 2b and 3b of the brake shoes 2 and 3 in the configuration of Figure 1. The anchor 9 may be affixed by welding instead of using rivets 10, and a pin-shaped or column-shaped anchor pin may be used instead of a rectangular plate.

The drum brake device is equipped with a pivot lever 11 in order to transmit a frictional force that occurs at each of the brake shoes 2 and 3, respectively, to the other brake shoes 3 and 2, respectively, during parking brake operation.

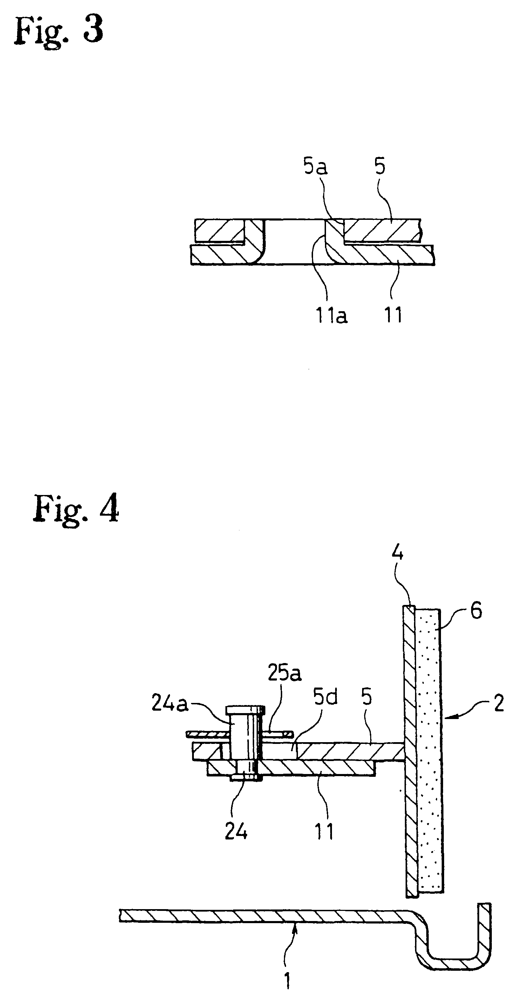

The pivot lever 11 is placed under the shoe web 5 of the brake shoe 2 at the right side in Figure 1. A protuberance 11a formed at the central region of the pivot lever 11 is pivotably inserted into a hole 5a of the shoe web 5 as can be seen in Figure 3. Alternatively, another pin may easily be used for the pivot lever 11 to pivotably be supported on the shoe web 5 instead of the above-described structure of using the protuberance 11a and the hole 5a.

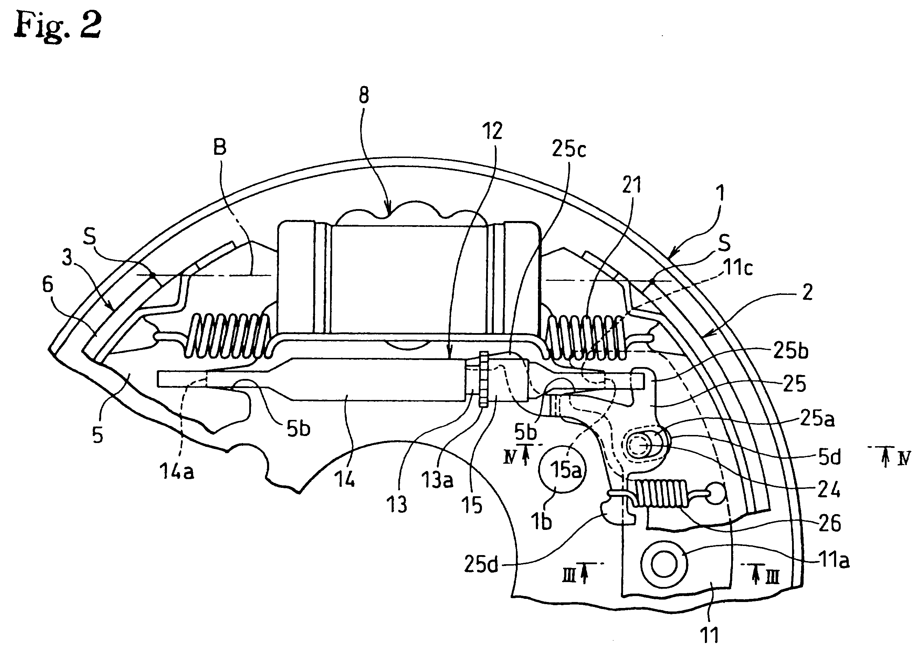

Adjacent to the service brake actuator 8, a shoe clearance adjustment device 12 is provided between the brake shoes 2 and 3. As shown in Figure 2, the shoe clearance adjustment device 12 is a conventional screw type adjustment device for adjusting the clearance between the brake drum, not shown in the drawings, and the brake shoes 2 and 3.

The shoe clearance adjustment device 12 comprises a bolt 13 with a toothed adjuster 13a, a tube 14 threadingly fitting on one end of the bolt 13, and a socket 15 rotatably fitting with the other end of the bolt 13. When inserting a tool, such as a screwdriver through a hole, not shown in the drawings, formed in the back plate 1 or in the brake drum, the entire length of the shoe clearance adjustment device 12 may be adjusted by screwing the bolt 13 with the toothed adjuster 13a in order to screw a part of the bolt 13 out from or into the tube 14.

One end of each above-described tube 14 and socket 15 are pressed to form plate-shaped ends. The ends each have a notched groove 14a and 15a, respectively. The bottom of the notched groove 14a abuts against a notched groove 5b formed at the shoe web 5 of the other brake shoe 3.

The bottom of the notched groove 15a abuts against a notched groove 5b formed at the shoe web 5 at the one brake shoe 2. A slight clearance is provided between the bottom of a notched groove 11c of the pivot lever 11 and the bottom at the notched groove 15a in consideration of manufacturing tolerances.

An incremental type automatic shoe clearance adjustment device, activated when the service brake is in operation, is explained below with reference to Figure 2 and Figure 4. A pin 24 fixed at one side of the pivot lever 11 is vertically set to freely protrude through a long hole 5d of the shoe web 5 on the one brake shoe 2. A stem 24a of the pin 24 pivotably supports an adjustment lever 25 via a hole 25a formed at the central region of the adjustment lever 25.

An arm 25b of the adjustment lever 25 abuts against a stepped surface of the notched groove 15a of the socket 15. Another arm 25c of the adjustment lever 25 engages the toothed adjuster 13a of the bolt 13. An adjustment spring 26 is extended between another arm 25d and the shoe web 5 and provides the adjustment lever 25 with a counter-clockwise spring force with the pin 24 as the fulcrum.

As shown in Figure 1 of the drawings, a parking brake actuator 16, activated when the parking brake is operated, is provided adjacent to the anchor 9. The parking brake actuator 16 comprises a forward-pull type brake lever 17 and a strut 18, etc. as is conventionally known. The brake lever 17 is mounted at the back of the shoe web 5 of the brake shoe 3. A basal part 17a of the brake lever 17 is pivotably supported by a pin 19 at the other end 3b of the brake shoe 3. A U-shaped bent groove is formed at the free end 17b of the brake lever 17 to hold a parking brake cable, not shown in the drawings.

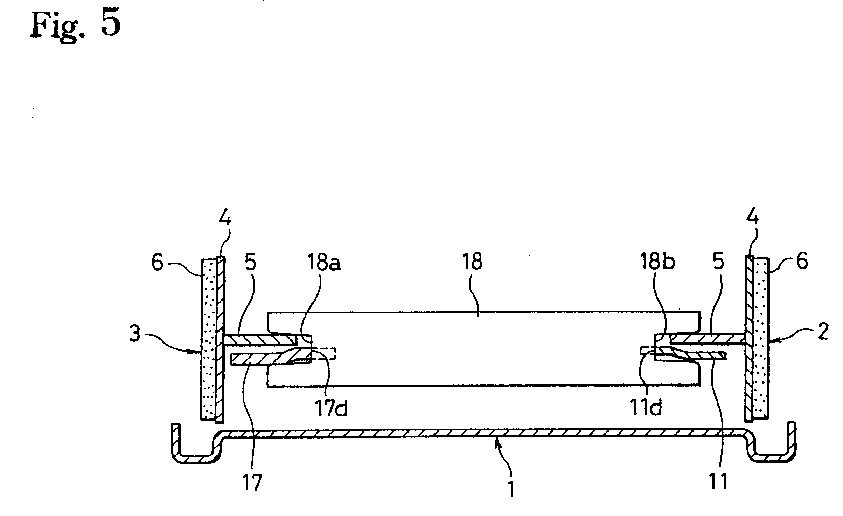

As shown in Figure 5 of the drawings, notched grooves 18a and 18b are formed at the ends of the plate-shaped strut 18. The bottom of the notched groove 18a abuts against the bottom of a notched groove 17d of the brake lever 17 which is urged thereto by the spring force of the adjustment spring 26. The bottom of the notched groove 18b abuts against the bottom of a notched groove 11d formed at the other end of the pivot lever 11.

In the above-described structure, as both brake shoes 2 and 3 spread open by operating the service brake, with the point of abutment with the anchor 9 as the fulcrum, the shoe clearance adjustment device 12 follows the other brake shoe 3 by the spring force of the adjustment spring 26. On the other hand, the pivot lever 11 follows the one brake shoe 2, and at that time the pivot lever 11 rotates clockwise in the configuration of Figure 1 and Figure 2 by the spring force of the adjustment spring 26, with the protuberance 11a as the fulcrum. Accordingly, the adjustment lever 25 rotates counter-clockwise in the configuration of Figure 1 and Figure 2 to the amount of the rotation of the pin 24 plus the amount of the movement of the shoe clearance adjustment device 12.

At this time, if the linings 6 are worn down and the amount of rotation of the arm 25c of the adjustment lever 25 exceeds a pitch between two adjacent teeth of the toothed adjuster 13a, the bolt 13 is screwed out from the tube 14 in order to maintain a constant clearance between the brake drum, not shown in the drawings, and the linings 6.

Also, when the parking brake is in operation, the shoe clearance adjustment device 12, the pivot lever 11, the adjustment lever 25, etc., follow together to the amount of opening of the other brake shoe 3, and therefore the parking brake operation does not effect an automatic adjustment operation.

As shown in Figure 1 of the drawings, return springs 21 and 22 are extended between the upper ends of the brake shoes 2 and 3, and between the lower ends of the brake shoes 2 and 3. Even if the brake lever 17 is set to be pulled slightly, the moment at the lower return spring 22 side is larger than the moment at the upper return spring 21 side, so that the anchor side end 2b of the brake shoe 2 is not detached from the anchor 9 when the brake is inactive.

That is, provided that the mounting load of the upper return spring 21 is F1, the mounting load of the lower return spring 22 is F2, the length from the pivot point between the brake shoe 2 and the pivot lever 11 to the upper return spring 21 is L1, and the length from the pivot point between the brake shoe 2 and the pivot lever 11 to the lower return spring 22 is L2, the device is to be structured to set the moment effecting on the brake shoe 2 to be $F1 \times L1 < F2 \times L2$ .

The operation of the drum brake device described above will be explained below.

When a pressure is applied to the service brake actuator 8, both brake shoes 2 and 3 spread open with the point of abutment with the anchor 9 as the fulcrum. The linings 6 frictionally engage with the rotating brake drum, not shown in the drawings, thereby braking the brake drum. At this time, one of the brake shoes 2 or 3 functions as a self-servo, and the other of the brake shoes 3 or 2 functions as non-servo, thereby having the drum brake device functioning as an LT type brake.

During operation of the parking brake, as shown in Figure 1 of the drawings, the free end 17b of the brake lever 17 is pulled to the right in Figure 1 through the parking brake cable, not shown in the drawings. Then, the brake lever 17 rotates clockwise with the pin 19 as the fulcrum, and the rotating force of the brake lever 17 is transmitted to the strut 18, the pivot lever 11, and the shoe clearance adjustment device 12, in that order. Accordingly, the other brake shoe 3 opens with the point of abutment with the anchor 9 as the fulcrum and frictionally engages with the brake drum, not shown in the drawings.

Then, the pivot lever 11 rotates counter-clockwise with the point of abutment with the shoe clearance adjustment device 12 as the fulcrum, and the operating force is transmitted to the brake shoe 2 via the protuberance 11a of the pivot lever 11. Therefore, the brake shoe 2 opens with the point of abutment with the anchor 9 as the fulcrum to frictionally engage with the brake drum not shown in the drawings. Also, the reaction force affects on the lower end of the brake shoe 3 via the pin 19.

At this point, when the vehicle is stopping on an uphill or a downhill slope, as the rotating force in the direction of the arrow R is applied to the brake drum, the frictional force of the other brake shoe 3 is transmitted to the one brake shoe 2 as an opening force via the shoe clearance adjustment device 12. Accordingly, when the parking brake is in operation, both brake shoes 2 and 3 have a self-servo effect, thereby functioning as a DS type brake.

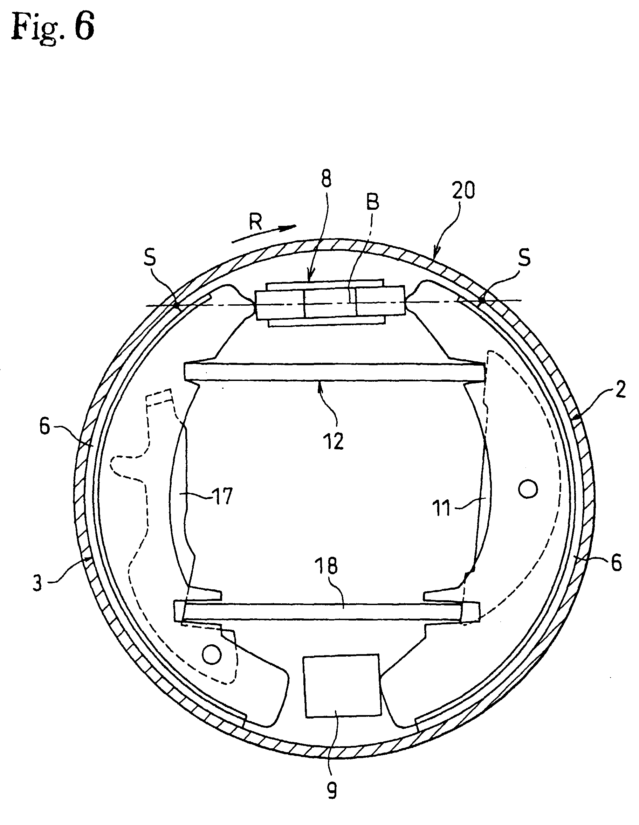

In Figure 6 of the drawings, an operation model is disclosed which explains that the vehicle is stopped by the service brake on a slope, and then the parking brake is operated to release the service brake and to maintain the stop.

At this time, as shown in the configuration of Figure 6, the brake drum 20 rotates in the direction of the arrow R together with the corresponding wheel to develop a braking force because of the gravity affecting on the vehicle on the slope.

Especially frequently when a manual transmission vehicle is starting on the slope, the parking brake is released while the service brake is temporarily operated, and then the service brake is immediately released to move the vehicle.

In such a situation, when observing the operation of the other brake shoe 3, a circumferential edge S of the lining 6 of the brake shoe 3 at the service brake actuator 8 side nearest the first adjacent ends is located on a line of action B of the service brake actuator 8 or at a point which is closer to the anchor 9 than the line of action B. Hence, when the parking brake is released and the service brake is operated, the operation force of the service brake actuator 8 applies the pressure to forcefully return the brake shoe 3 towards the anchor 9 side.

Accordingly, when the service brake is released to start the vehicle on a slope, the brake shoe 3 smoothly returns to its original position by the contracting force of the return springs 21 and 22. This prevents the development of any dragging as it is usually seen in conventional devices.

Moreover, the brake shoe 3 does not bite, thereby reducing the applied force by leverage affecting on the piston of the service brake actuator 8. Thus, any scratching or wearing of the piston of the service brake actuator 8 may be prevented, and the durability of the service brake actuator 8 is increased.

In addition, even if the vehicle is moving and the brake drum 20 rotates in the direction opposite to the arrow R in a condition where the brake shoe 3 abuts against the anchor block 9 with the parking brake in operation, the same type of problem described above can be clearly seen with respect to the other brake shoe 2. Therefore, a detailed explanation is omitted here.

Second Embodiment

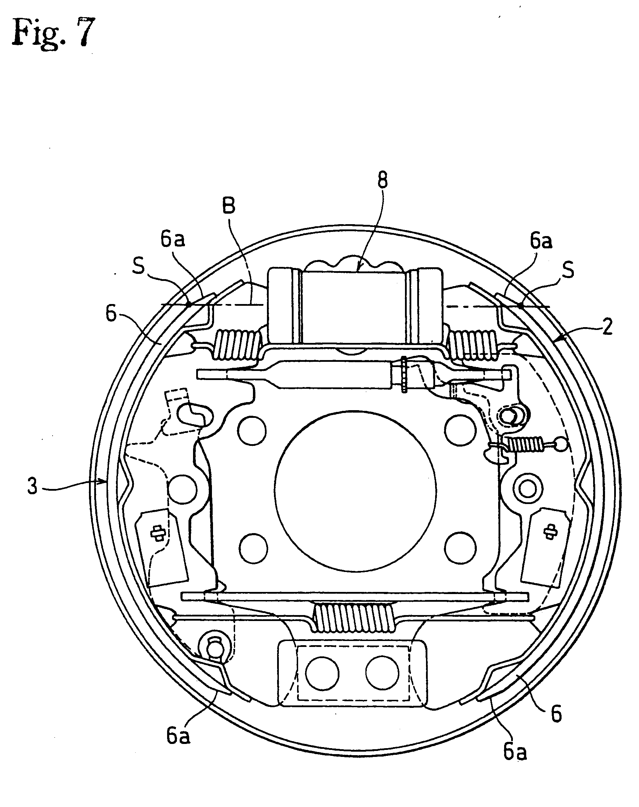

As shown in Figure 7 of the drawings, chamfers 6a may be formed at the ends of the linings 6 of the respective brake shoes 2 and 3.

The fixing points of the linings 6 of the brake shoes 2 and 3 at the side of the service brake actuator 8, i.e. the points of the circumferential edges S of the ends of the linings 6 are set to be on the above-mentioned line of action B of the service brake actuator 8 or closer to the anchor 9 than the line of action B, where the same explanation as in the first embodiment is applicable.

In this embodiment, the forming of chamfers 6a at the ends of the linings 6 avoids the edges being caught on the brake drum, thereby facilitating the influence of a stick-slip, which improves the problem of brake judder and brake noise by smoothing the contact with the brake drum.

Third Embodiment

The embodiments described above deal with a drum brake device having an incremental type automatic adjustment system, where the shoe clearance adjustment device 12 automatically adjusts the clearance between the lining 6 of the brake shoes 2 and 3, respectively, and the brake drum. However, the automatic adjustment system is not limited to this type, and the invention may also be operated with a manual adjustment system instead of the automatic system.

In addition, a cross-pull type parking brake may be used in the parking brake system of the drum brake device.

Moreover, the first embodiment described above discloses a drum brake device where the moment of the return springs 21 and 22 effecting on the brake shoe 2 is set to establish a certain relation with other parts. However, the invention is not limited to such an embodiment, and the device is applicable as long as the drum brake device is functioning as a leading-trailing type or LT type when the service brake is in operation, and as a duo-servo type or DS type when the parking brake is in operation.

Taking account of the above detailed description of preferred embodiments, it is apparent that the invention achieves the following advantageous effects:

(A) The circumferential edge of each lining of the respective brake shoe at the service brake actuator side nearest the first adjacent ends is located on a line of action of the service brake actuator or at a point closer to the anchor than that line. This prevents the brake shoe from biting because of the operation of the service brake when the vehicle starts on a slope, and therefore the brake shoe returns smoothly.

Accordingly, a driver may drive the vehicle smoothly without experiencing any problems of dragging and locking so that the possibility of having an uncomfortable feeling is eliminated.

(B) The invention has the further advantage in that it prevents the brake shoe from biting because of the operation of the service brake, and the amplified force by leverage of the service brake actuator is reduced resulting in that the durability is increased.

(C) Chamfers formed on the ends of the lining may avoid that the edges being caught on the brake drum so that the lining contacts the brake drum smoothly, which facilitates the influence of a stick-slip; therefore, the problems of brake judder and brake noice are relieved or at least reduced.

It is readily apparent that the drum brake device described above has the advantage of wide commericial utility. It should be understood that the specific forms of the invention described above are intended to be representative only without any restriction, since certain modifications within the scope of these teachings will be readily apparent to those skilled in the art.

**Claims**

1. A drum brake device comprising

   - a back plate (1);
   - two brake shoes (2, 3) set to face each other on the back plate (1);
   - a service brake actuator (8) adapted to be activated by a service brake mounted on the back plate (1) between one pair of first adjacent ends (2a, 3a) of the brake shoes (2, 3);
   - an anchor (9) mounted on the back plate (1) between another pair of second adjacent ends (2b, 3b) of the brake shoes (2, 3);
   - a shoe clearance adjustment device (12) provided adjacent to the service brake actuator (8) and provided between the brake shoes (2, 3);
   - a parking brake actuator (16) adapted to be activated by a parking brake provided adjacent to the anchor (9); linings (6) provided on the respective two brake shoes (2, 3); and
   - a pivot lever (11) pivotably mounted at the central region of one brake shoe (2), one end of the pivot lever (11) and another end of the pivot lever (11), respectively, being functionally engaged with the shoe clearance adjustment device (12) and the parking brake actuator (16),
     wherein a circumferential edge (S) of each lining (6) of the respective brake shoes (2, 3) at the service brake actuator (8) side nearest the first adjacent ends (2a, 3a) is located on a line of action (B) of the service brake acutator (8) or at a point closer to the anchor (9) than the line of action (B).

2.  The drum brake device according to claim 1, wherein a chamfer (6a) is formed at the respective end of the lining (6) at the circumferential end.

Fig. 1

Fig. 2

EP 0 905 401 A2

# Fig. 3

# Fig. 4

Fig. 5

# Fig. 6

Fig. 7

Fig. 8

Fig. 9

Fig. 10